# EUROPÄISCHE PATENTSCHRIFT

(11) **EP 1 031 674 B1**
(45) Veröffentlichungstag und Bekanntmachung des Hinweises auf die Patenterteilung: **08.10.2003**
(21) Anmeldenummer: 99125176.0
(22) Anmeldetag: 17.12.1999
(51) Int. Cl.: E04B 9/18, E04F 13/08, F16B 5/02

(54) **An einem Verankerungsgrund anbringbares Profil**
Profile for mounting on a support
Profilé à attacher à un support

(30) Priorität: 27.02.1999 DE 19908585
(43) Veröffentlichungstag der Anmeldung: 30.08.2000
(73) Patentinhaber: Profil-Vertrieb GmbH, 76571 Gaggenau (DE)
(72) Erfinder: Hertweck, Theo, 76532 Baden-Baden (DE)
(74) Vertreter: Geitz, Holger

(56) Entgegenhaltungen:
- EP-A- 0 072 965
- EP-A- 0 122 368
- EP-A- 0 391 764
- DE-B- 1 172 479
- GB-A- 2 181 204

## Beschreibung

Die Erfindung betrifft ein mittels Befestigungsschrauben an einem Verankerungsgrund anbringbares Profil mit wenigstens einem sich in der Montagelage im wesentlichen parallel zum Verankerungsgrund erstreckenden Befestigungsabschnitt, der mit zumindest einem Schraubenloch für die Aufnahme einer Befestigungsschraube, die in den Verankerungsgrund eindrehbar ist und einen in der Montagelage den Rand des Schraubenlochs übergreifenden Schraubenkopf mit einer Ansatzfläche für einen Schraubendreher besitzt, ausgerüstet ist.

Bei den Profilen, auf die sich die Erfindung bezieht, kann es sich um Tragprofile zum Befestigen von Paneelen oder sonstigen Bekleidungselementen, aber auch um spezielle Befestigungselemente zum Anclipsen C-förmiger Trageprofile handeln, die mit ihren Befestigungsabschnitten nach oben weisend an einem Verankerungsgrund mittels in letzterem eingedrehter Befestigungsschrauben angebracht werden. Bei dem Verankerungsgrund handelt es sich in der Regel um Holzbalkendecken, an deren Balken die Profile angeschraubt werden.

Insbesondere bei älteren Holzbalkendecken weist der Verankerungsgrund häufig Unebenheiten auf, die bisher durch zwischen den Holzbalken und den Befestigungsabschnitten der Profile eingeklemmte Zwischenlagen ausgeglichen wurden. Dies ist indessen bei der Montage zeitaufwendig und daher teuer.

Ein Profil mit den eingangs erwähnten Merkmalen ist aus der GB-A-2181204 bekannt geworden. Dabei ist eine spritzgegossene Rückplatte aus Kunststoff vorgesehen, die mit einem Schraubenloch zur Aufnahme eines Schafts einer Befestigungsschraube und mit drei, in gleichen Winkelabständen um das Schraubenloch angeordneten und sich von diesem radial nach außen erstreckenden Schlitzen versehen ist. An den äußeren Enden der Schlitze ist an der Rückplatte jeweils ein sich normal zu dieser erstreckender elastischer Rasthaken vorgesehen. Diese Rasthaken dienen dazu, ein Herausfallen der durch das Schraubenloch hindurch gesteckten Befestigungsschraube bei der Befestigung der Rückplatte an einer Decke zu vermeiden. Eine schnelle und lagerichtige Montage der Profile ist bei bereits in die Schraubenlöcher eingesteckten und nach unten über die Rückplatten hinausstehenden Befestigungsschrauben erschwert. Die filigranen elastischen Rasthaken sind für eine sichere Justage der Profile in einem etwaige Unebenheiten des Verankerungsgrundes ausgleichenden Abstand nicht geeignet.

Die der Erfindung zugrundeliegende Aufgabe besteht daher darin, Profile der vorgenannten Art und Zweckbestimmung so zu verbessern, dass diese bei Unebenheiten aufweisenden Verankerungsgründen einfach und schnell lagerichtig montierbar sind.

Gelöst ist diese Aufgabe erfindungsgemäß dadurch, dass bei dem Profil nach dem Oberbegriff des Patentanspruchs 1 wenigstens im Bereich des Schraubenlochs vom Befestigungsabschnitt eine Sicherungslasche vorsteht, die ein ungehindertes Eindrehen der Befestigungsschraube ermöglicht, deren Schraubenkopf einen Schlitz oder Kreuzschlitz als Ansatzfläche für den Schraubendreher besitzt, wobei die Sicherungslasche in der Montagelage des Profils nach dem Eindrehen der Befestigungsschraube in einen Verankerungsgrund in eine deren Schraubenkopf bei Freilassung der Schraubendreher-Ansatzfläche randseitig übergreifende Sicherungslage bleibend verformbar ist, in der die Sicherungslasche den Schraubenkopf ohne Überdeckung der Schraubendreher-Ansatzfläche übergreift.

Bei dem erfindungsgemäßen Profil handelt es sich somit darum, dass an den Befestigungsabschnitt zumindest im Bereich eines für die Aufnahme einer Befestigungsschraube dienenden Schraubenlochs eine Sicherungslasche angeformt ist, die ein ungehindertes Eindrehen der Befestigungsschraube ermöglicht und nach dem Eindrehen der Befestigungsschraube in eine Sicherungslage abkantbar oder in sonstiger Weise verformbar ist, in der die Sicherungslasche den Schraubenkopf randseitig ohne Überdeckung der Schraubendreher-Ansatzfläche übergreift.

Ein so ausgebildetes Profil ermöglicht dessen Anbringung am Verankerungsgrund, indem zunächst die Befestigungsschraube bzw. Befestigungsschrauben eingeschraubt wird/werden, bis der Befestigungsabschnitt am Verankerungsgrund anliegt, worauf die hochstehende Sicherungslasche beispielsweise mittels eines Hammerschlags in die den jeweiligen Schraubenkopf randseitig übergreifende Sicherungslage abgekantet wird. Danach kann das Profil durch Zurückdrehen der in den Verankerungsgrund eingeschraubten Befestigungsschraube justiert, also in einen etwaige Unebenheiten des Verankerungsgrundes ausgleichendem Abstand vom Verankerungsgrund gebracht werden.

Eine Weiterbildung der Erfindung sieht vor, dass die Sicherungslasche im Bereich des Schraubenlochs mit einer Ausklinkung derart versehen ist, dass in der Sicherungslage die Ausklinkungsränder den Schraubenkopf unter Freilassung der Schraubendreher-Ansatzfläche randseitig übergreifen.

Bei dieser Weiterbildung gelingt es je nach Bemessung der Sicherungslasche und der Ausklinkung, den Kopf einer Befestigungsschraube nicht nur randseitig in der Art eines Kreisabschnittes zu übergreifen, sondern die Ausklinkungsränder können den Rand des Schraubenkopfs über einen Umfangswinkel durchaus bis zu 180° überdecken.

Eine abermalige Weiterbildung der Erfindung sieht vor, dass auf der von einem Profil-Mittelteil abgewandten Seite des Befestigungsabschnittes von diesem ein längslaufender Sicherungsflansch als in die Sicherungslage abkantbare Sicherungslasche hochgestellt ist. Dieser Weiterbildung kommt insbesondere bei langgestreckten Profilen Bedeutung zu.

Ein derartiges Profil kann durch die Ausbildung als langgestrecktes Hutprofil gekennzeichnet sein, das als Befestigungsabschnitte beidseitig von einem Profil-Mittelteil längslaufende Befestigungsflanschen als Befestigungsabschnitte mit von diesen randseitig hochgestellten Sicherungsflanschen besitzt.

Im Rahmen der Erfindung kann das Profil aber auch durch die Ausbildung als Befestigungselement zum Anbringen, etwa Anclipsen, U-förmiger Deckentrage-Profile gekennzeichnet sein, bei dem auf einander gegenüberliegenden Seiten von einem Profil-Mittelteil jeweils von einem Schraubenloch durchdrungene Befestigungslaschen als Befestigungsabschnitte seitlich vorstehen und auf den vom Mitteilteil abgewandten Seiten von den Befestigungslaschen jeweils eine in die einen Schraubenkopf randseitig übergreifenden Sicherungslage abkantbare Sicherungslage hochgestellt ist.

Alternativ zu der vorstehend erläuterten Lösung der Erfindungsaufgabe kann diese Aufgabe auch durch die Merkmale des Patentanspruchs 6, insbesondere dadurch gelöst sein, dass bei der Ausbildung als langgestrecktes Hutprofil mit beidseitig von einem Befestigungsabschnitt im wesentlichen in Parallelebenen zu dem Befestigungsabschnitt längslaufenden Tragflanschen, die für die Anbringung von Paneelen oder sonstigen flächenhaften Bekleidungselementen bestimmt sind, in sich zwischen den Tragflanschen und dem Befestigungsabschnitt erstreckenden Profilstegen längslaufende und in der Montagelage den einen Schlitz oder Kreuzschlitz als Ansatzfläche für den Schraubendreher aufweisenden Schraubenkopf einer eingedrehten Befestigungsschraube randseitig übergreifende Sicken als Sicherungsrasten hineingeformt sowie in einem den Durchmesser des Kopfs der Befestigungsschraube unterschreitenden Abstand voneinander symmetrisch zu den Schraubenlöchern angeordnet sind.

Kennzeichnend für diese Lösungsvariante ist die federelastische Ausbildung der Sicherungsrast derart, dass beim Eindrehen der Befestigungsschraube deren Schraubenkopf zunächst auf die vorstehende Sicherungsrast auftrifft, dass die Sicherungsrast unter der Wirkung der beim Eindrehen der Befestigungsschraube auftretenden Kraft seitlich ausweicht und nach dem vollständigen Eindrehen der Befestigungsschraube in eine den Schraubenkopf randseitig übergreifende Sicherungslage zurückfedert. Dabei gleitet beim Eindrehen einer Befestigungsschraube der Schraubenkopf mit seinen Rändern auf die in das Profil hinein vorstehenden Sicken auf und spreizt beim weiteren Eindrehen die Profilschenkel auseinander, worauf die Profilschenkel in ihre Ursprungslage zurückfedern, wenn der Schraubenkopf die Sicken überwunden hat.

Diese Lösungsvariante ermöglicht eine besonders einfache und schnelle Montage derartiger Profile, weil die Sicherungsrast nach dem Eindrehen der Befestigungsschrauben selbsttätig in ihre Sicherungslage gelangt.

Um das Aufspreizen der mit den längslaufenden Sicken ausgebildeten Profilschenkel zu erleichtern, sieht eine abermalige Weiterbildung vor, dass die längslaufenden Sicken nach der vom Befestigungsabschnitt weg weisenden Seite von divergierend verlaufenden Schrägen und auf der zum Befestigungsabschnitt hinweisenden Seite von Hinterschneidungen der Profilschenkel bildenden Stufen begrenzt sind.

Anhand der beigefügten Zeichnungen sollen nachstehend verschiedene Ausführungsformen der Erfindung erläutert werden. In schematischen Ansichten zeigen:
- Fig. 1: in einer perspektivischen Darstellung ein hutförmiges Decken-Trageprofil in Überkopflage, das für die Anbringung von Deckenpaneelen oder ähnlichen flächenhaften Bekleidungselementen bestimmt ist,
- Fig. 2: eine vergrößerte Detailansicht des Profils entsprechend dem Ausschnitt II in Fig. 1,
- Fig:. 3: einen Ausschnitt eines an einem Holzbalken als Verankerungsgrund mittels einer Befestigungsschraube unterseitig angebrachten Profils,
- Fig. 4: in einer Ansicht die in Fig. 3 einen Ausschnitt des montierten Profils im justierten Zustand beabstandet vom Verankerungsgrund,
- Fig. 5: eine ausschnittsweise Unteransicht des montierten Profils mit Blick gemäß Pfeil V in Fig. 4,
- Fig. 6: ein Befestigungselement zum unterseitigen Aufclipsen C-förmiger Decken-Trageprofile in einer perspektivischen Ansicht,
- Fig. 7: das Befestigungselement nach Fig. 6 nach der unterseitigen Anbringung an einem Holzbalken als Verankerungsgrund,
- Fig. 8: in perspektivischer Darstellung ein dem Profil nach Fig. 1 ähnliches Decken-Trageprofil in Überkopflage,
- Fig. 9: eine vergrößerte Detailansicht des Profils nach Fig. 8 entsprechend dem Ausschnitt IX in Fig. 8 und
- Fig. 10: ebenfalls in einer perspektivischen Ansicht ein anderes hutförmiges Decken-Trageprofil.

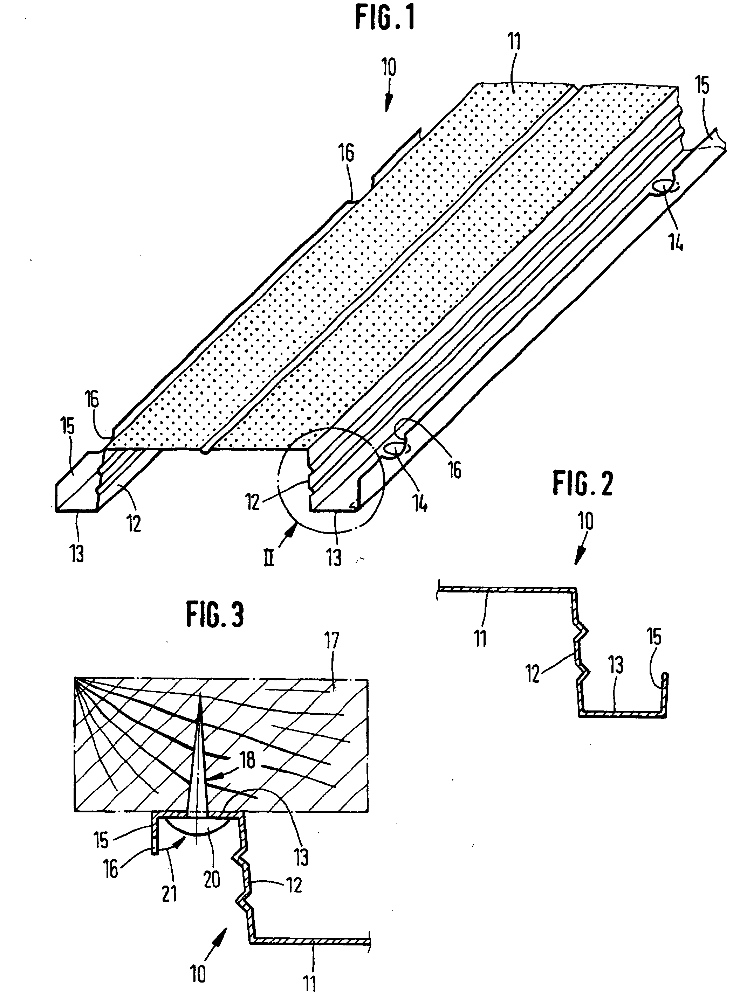

Das in Fig. 1 in Überkopflage gezeigte Decken-Trageprofil 10 ist hutförmig ausgebildet und besitzt ein mit einer längslaufenden Versteifungssicke ausgebildetes Mittelteil 11 mit einer Fischhautprofilierung, die das Eindrehen selbstschneidender Schrauben erleichtert, was jedoch hier nicht weiter interessiert. An beiden Längsseiten des Mittelteils 11 schließen sich an dieses leicht divergierend zueinander verlaufende, ebenfalls mit längslaufenden Versteifungssicken versehene Profilschenkel 12 mit jeweils nach außen weisenden Befestigungsflanschen 13 an, in denen in Profillängsrichtung voneinander beabstandet Schraubenlöcher 14 angeordnet sind. Längs der äußeren Kanten der Befestigungsflansche 13 sind von diesen längslaufende Randflansche 15 in Richtung auf das Mittelteil 11 hochgestellt, die im Bereich der Schraubenlöcher 14 mit kreisabschnittsförmigen Ausklinkungen 16 versehen sind.

Bei bestimmungsgemäßer Verwendung der Decken-Trageprofile 10 werden diese aus der in Fig. 3 ersichtlichen Weise jeweils mit ihrem Mittelteil 11 nach unten weisend und mit ihren Befestigungsflanschen 13 am Verankerungsgrund 17, bei dem es sich beispielsweise um einen Holzbalken handeln kann, anliegend mittels die Schraubenlöcher 14 durchdringender Befestigungsschrauben 18 angeschraubt. Dabei übergreift ein mit einem Kreuzschlitz 19 als Schraubendreher-Ansatzfläche versehener Schraubenkopf 20 jeweils den Rand des von der betreffenden Befestigungsschraube 18 durchdrungenen Schraubenlochs 14.

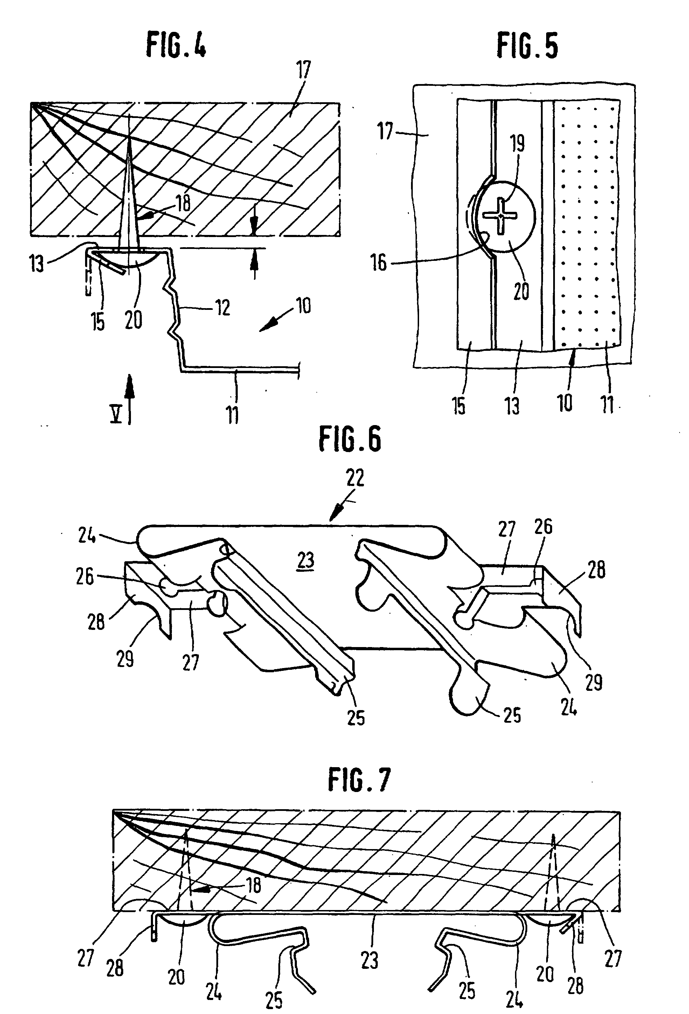

Nach dem Anschrauben des Decken-Trageprofils 10 sind die im Bereich der Schraubenlöcher 14 mit Ausklinkungen 16 versehenen Randflansche 15 gemäß Pfeil 21 (in Fig. 3) in eine die Schraubenköpfe 20 der Befestigungsschrauben 18 randseitig übergreifende Sicherungslage abkantbar, etwa mittels jeweils eines im Bereich der mit Ausklinkungen 16 versehenen Abschnitte aufbringbaren Hammerschlages. Die Fig. 4 und 5 zeigen einen in seine Sicherungslage abgekanteten Randflansch 15 und insbesondere aus Fig. 5 ist ersichtlich, daß angesichts der Ausklinkungen 16 der in die Sicherungslage abgekantete Randflansch 15 den Kreuzschlitz 19 im Schraubenkopf 20 nicht überdeckt. Dadurch ist es möglich, zum Ausgleich etwaiger Unebenheiten des Verankerungsgrundes 17 das Decken-Trageprofil 10 dadurch in seiner Höhenlage zu justieren, daß die in den Verankerungsgrund 17 eingedrehte Befestigungsschraube 18 mehr oder weniger zurückgedreht wird mit der Folge, daß das Decken-Trageprofil 10 mit seinen Befestigungsflanschen 13 vom Verankerungsgrund 17 abhebt und beabstandet vom Verankerungsgrund 17 gehalten ist. Fig. 4 zeigt eine derartige Halterung des Decken-Trageprofils 10 mit vom Verankerungsgrund 17 beabstandeten Befestigungsflanschen 13.

Bei dem in den Fig. 6 und 7 veranschaulichtem Befestigungselement 22 handelt es sich um ein aus einem einstückigen Blechzuschnitt hergestelltes Blechformteil, bei dem von einem ebenen Mittelteil 23 symmetrisch zu einer Mittellängsachse hier im einzelnen nicht interessierende Federbügel 24 mit Haltelaschen 25 zum Aufclipsen C-förmiger Trageprofile abgebogen sind. In der Ebene des Mittelteils 23 erstreckt sich von diesem auf beiden Seiten jeweils eine mit einem Schraubenloch 26 versehene Befestigungslasche 27 fort. An den vom Mittelteil 23 entfernten äußeren Kanten sind von den Befestigungslaschen 27 Sicherunglaschen 28 nach der zu den Federbügeln 24 hinweisenden Seite abgekantet, in die sich von deren freien Kanten mit den Schraubenlöchern 26 der Befestigungslaschen 27 korrespondierende Ausklinkungen 29 hineinerstrecken.

Bei bestimmungsgemäßer Verwendung werden die Befestigungselemente 22 in der aus Fig. 7 ersichtlichen Weise an einem Verankerungsgrund 17, etwa einem Holzbalken, mittels die Schraubenlöcher 26 in den Befestigungsläschen 27 durchdringender Befestigungsschrauben 18 mit nach unten vorstehenden Federbügeln 24 angeschraubt. Nach dem Anschrauben der Befestigungslaschen 26 werden die Sicherungslaschen 28 in der Weise, wie dies in Verbindung mit dem Decken-Trageprofil 10 und den Fig. 1 bis 5 vorstehend erläutertet worden ist, derart abgekantet, daß die Sicherungslaschen 28 im Bereich ihrer Ausklinkungen 29 den Schraubenkopf 20 der jeweiligen Befestigungsschraube 18 randseitig ohne Überdeckung des Kreuzschlitzes 19 übergreifen. In Fig. 7 ist links eine unverformte Sicherungslasche 28 dargestellt, hingegen rechts die Sicherungslasche 28 in der abgekanteten und den Kopf 20 der Befestigungsschraube 18 randseitig übergreifenden Sicherungslage.

Das in den Fig. 6 und 7 veranschaulichte Befestigungselement 22 ist in gleicher Weise wie das Decken-Trageprofil 10 in der Weise justierbar, daß nach dem Anschrauben an den Verankerungsgrund 17 und dem nachfolgenden Abkanten der Sicherungslaschen 28 in ihre Sicherungslagen die Befestigungsschrauben 18 mehr oder weniger zurückgedreht werden, wobei das in der Darstellung gemäß Fig. 7 am Verankerungsgrund 17 anliegende Mittelteil 23 und die davon seitlich vorstehenden Befestigungslaschen 27 vom Verankerungsgrund 17 abheben und in einer von letzterem beabstandeten Lage gehalten sind.

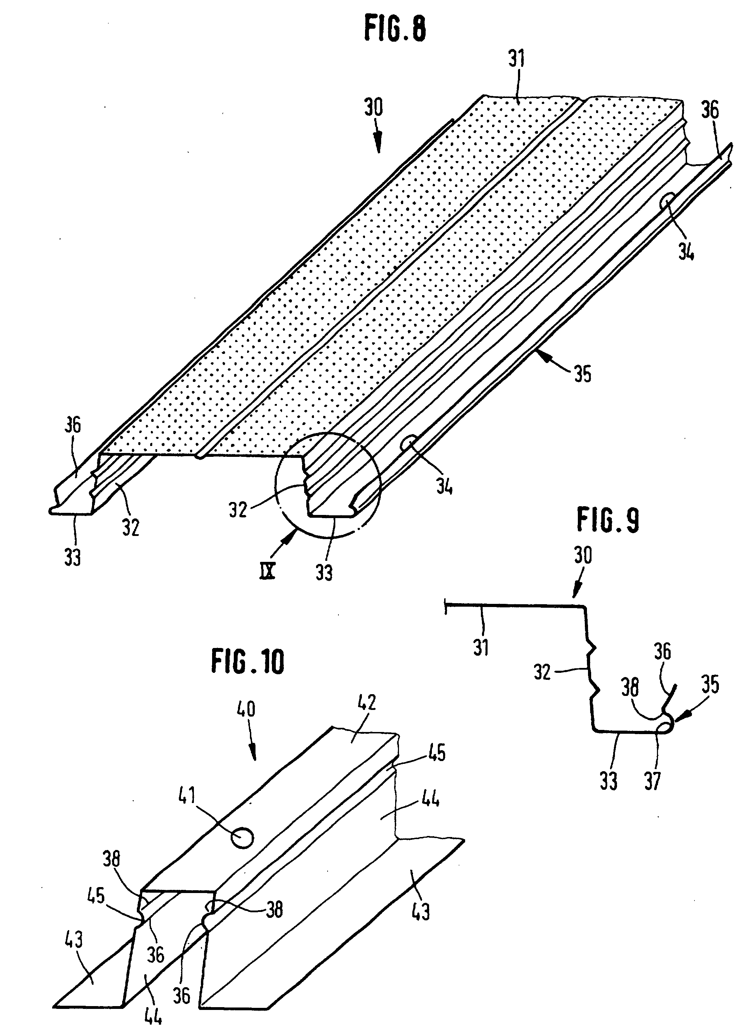

Das in den Fig. 8 und 9 veranschaulichte Decken-Trageprofil 30 ist in seinem grundsätzlichen Aufbau gleich dem Decken-Trageprofil 10 und besitzt ein mit einer längslaufenden Versteifungssicke ausgerüstetes Mittelteil 31 mit einer das Eindrehen selbstschneidender Schrauben 18 erleichternden Fischhautprofilierung und an das Mittelteil 11 schließen sich an dessen Längsseiten leicht divergierend zueinander verlaufende Profilschenkel 32 an, die ebenfalls mit längslaufenden Versteifungssicken versehen sind. In einer Parallelebene zu dem Mittelteil 11 stehen seitlich von den divergierend zueinander verlaufenden Profilschenkeln 32 Befestigungsflansche 33 seitlich vor, die mit Schraubenlöchern 34 versehen sind und an deren äußeren Längskanten sich federelastisch ausgebildete Sicherungsrasten 35 entlang erstrecken. Die Sicherungsrasten 35 bestehen jeweils aus einem nach der zu dem Mittelteil 31 hinweisenden Seite vor stehenden Federschenkel 36 und einem den Federschenkel 36 mit der jeweils äußeren-Längskante eines Befestigungsflanschs 33 verbindenden C-förmigen Federabschnitt 37. Die Federschenkel 36 der den beiden äußeren Längskanten der Befestigungsflansche 33 zugeordneten Sicherungsrasten 35 sind leicht nach außen gestellt und erstrecken sich divergierend zueinander vom jeweiligen Befestigungsflansch 33 fort. Auf der zum jeweiligen Befestigungsflansch 33 hinweisenden Seite der Federschenkel 36 bilden sich angesichts deren Verbindung mit den Außenkanten der Befestigungsflanschen 33 mittels der C-förmigen Federabschnitte 37 Hinterschneidungen 38.

Angebracht werden Decken-Trageprofile 30 nach den Fig. 8 und 9 an einem Verankerungsgrund 17 in gleicher Weise wie das Decken-Trageprofil 10, indem das Decken-Trageprofil 30 mit nach unten weisendem Mittelteil 31 und am Verankerungsgrund 17 anliegenden Befestigungsflanschen 33 mittels die in den Befestigungsflanschen 33 angeordneten Schraubenlöcher 34 durchdringender Befestigungsschrauben 18 angeschraubt wird, wie dies Fig. 3 für das Decken-Trageprofil 10 zeigt. Beim Eindrehen der Befestigungsschrauben 18 treffen deren Schraubenköpfe 20 auf die von den leicht seitlich ausgestellten Federschenkeln 36 gebildeten Schrägen auf mit der Folge, daß beim weiteren Eindrehen der Befestigungsschrauben 18 die Federschenkel 36 nach außen weggedrückt werden und in ihre den Schraubenkopf 20 der jeweiligen Schraube 18 randseitig übergreifende Sicherungslage einschnappen, sobald der Schraubenkopf 20 den Übergangsbereich zwischen dem jeweiligen Federschenkel 36 und den angrenzenden C-förmigen Federabschnitt 37 überwunden hat.

Auch das Decken-Trageprofil 30 nach den Fig. 8 und 9 ist nach dem Anschrauben an einem Verankerungsgrund 17 zum Ausgleich etwaiger Unebenheiten des Verankerungsgrundes 17 justierbar, indem die Befestigungsschrauben 18 um ein entsprechendes Maß zurückgedreht werden, wobei der von der Hinterschneidung 38 der jeweiligen Sicherungsrast 35 übergriffene Rand des Schraubenkopfs 20 der Befestigungsschrauben 18 das Deckenprofil mitnimmt und mithin um ein der Zurückrehung der Befestigungsschrauben 18 entsprechendes Maß vom Verankerungsgrund 17 abhebt.

Das in Fig. 10 veranschaulichte Decken-Trageprofil 40 ist ebenfalls hutförmig ausgebildet und besitzt ein mit Schraubenlöchern 41 versehenes.Mittelteil 42 sowie zwei sich in Parallelebenen zum Mittelteil nach außen forterstreckende Tragflanschen 43, an denen in hier nicht weiter interessierender Weise Paneele oder sonstige flächenhafte Bekleidungselemente anbringbar sind. Zwischen den Tragflanschen 43 und dem Mittelteil 41 erstrecken sich zwei annähernd parallel zueinander verlaufende Profilschenkel 44, in die in einem der Dicke der Schraubenköpfe 20 der einzusetzenden Befestigungsschrauben 18 entsprechenden Abstand vom Mittelteil als Sicherungsrasten längslaufende Sicken 45 hineingeformt sind, die in den von den beiden Profilschenkeln 44 gebildeten Profilhohlraum vorstehen. Diese Längssicken 45 sind auf der zu dem Mittelteil 42 als Befestigungsabschnitt hinweisenden Seite von Hinterschneidungen bildenden Stufen 38 und sich daran anschließenden Schrägen 36 begrenzt, die zu den Tragflanschen 43 hin divergierend zueinander verlaufen.

Bei bestimmungsgemäßer Verwendung wird das Decken-Trageprofil 40 gemäß Fig. 10 mit seinem Mittelteil 42 am Verankerungsgrund 17 anliegend an letzterem mittels die Schraubenlöcher 41 durchdringender Befestigungsschrauben 18 angeschraubt. Beim Eindrehen der Befestigungsschrauben 18 treffen deren Schraubenköpfe 20 auf die Schrägen 36 der als längslaufende Sicken 45 ausgebildeten Sicherungsrasten auf mit der Folge, daß beim weiteren Eindrehen der Befestigungsschrauben 18 die Profilschenkel 44 eine Auseinanderspreizung erfahren und, sobald die Schraubenköpfe 20 die Schrägflächen 36 der Sicherungsrasten überwunden haben, in ihre Ursprungslagen zurückfedern mit der Folge, daß die Hinterschneidungen bildenden Stufen 38 der Sicherungsrasten die Schraubenköpfe 20 randseitig übergreifen.

Nach dem Eindrehen der Befestigungsschrauben.18 und dem Einschnappen der Sicherungsrasten 45 in ihre Sicherungslagen gelingt zwecks Ausgleichs etwaiger Unebenheiten des Verankerungsgrundes 17 das Justieren auch dieses Profils, indem die Befestigungsschrauben 18 um ein die Unebenheiten ausgleichendes Maß zurückgedreht werden, wobei die von den Sicherungsrasten 45 randseitig übergriffenen Schraubenköpfe 20 das Profil mitnehmen und das Mittelteil 41 des Profils um ein dem Zurückdrehen der Befestigungsschrauben 18 entsprechendes Maß vom Verankerungsgrund 17 abhebt.

## Patentansprüche

1. An einem Verankerungsgrund (17) mittels Befestigungsschrauben (18) anbringbares Profil, insbesondere Trägerprofil für die Aufnahme von Paneelen oder anderen flächenhaften Bekleidungselementen, mit wenigstens einem sich in der Montagelage im wesentlichen parallel zum Verankerungsgrund (17) erstreckenden Befestigungsabschnitt (13, 27), der mit zumindest einem Schraubenloch (14, 26) für die Aufnahme einer Befestigungsschraube (18), die in den Verankerungsgrund eindrehbar ist und einen in der Montagelage den Rand des Schraubenlochs (14, 26) übergreifenden Schraubenkopf (20) mit einer Ansatzfläche für einen Schraubendreher besitzt, ausgerüstet ist,
**dadurch gekennzeichnet,**
**dass** wenigstens im Bereich des Schraubenlochs (14, 26) vom Befestigungsabschnitt (13, 27) eine Sicherungslasche (15, 28) vorsteht, die ein ungehindertes Eindrehen der Befestigungsschraube ermöglicht, deren Schraubenkopf (20) einen Schlitz oder Kreuzschlitz (19) als Ansatzfläche für den Schraubendreher besitzt, wobei die Sicherungslasche (15, 28) in der Montagelage des Profils nach dem Eindrehen der Befestigungsschraube (18) in eine deren Schraubenkopf (20) bei Freilassung der Schraubendreher-Ansatzfläche (19) randseitig übergreifende Sicherungslage bleibend verformbar ist, in der die Sicherungslasche (15, 28) den Schraubenkopf (20) ohne Überdeckung der Schraubendreher-Ansatzfläche (19) übergreift.

2. Profil nach Anspruch 1, **dadurch gekennzeichnet, dass** die Sicherungslasche (15, 28) im Bereich des Schraubenlochs (14, 26) mit einer Ausklinkung (16, 29) derart versehen ist, dass in der Sicherungslage die Ausklinkungsränder den Schraubenkopf (20) unter Freilassung der Schraubendreher-Ansatzfläche (19) randseitig übergreifen.

3. Profil nach Anspruch 1 oder 2, **dadurch gekennzeichnet, dass** auf der von einem Profil-Mittelteil (11, 23) abgewandten Seite des Befestigungsabschnittes (13, 27) von diesem ein längslaufender Sicherungsflansch (15, 28) als in die Sicherungslage abkantbare Sicherungslasche hochgestellt ist.

4. Profil nach Anspruch 3, **gekennzeichnet durch** die Ausbildung als langgestrecktes Hutprofil (10), das als Befestigungsabschnitte beidseitig von einem Profil-Mittelteil (11) längslaufende Befestigungsflanschen (13) mit von diesen randseitig hochgestellten Sicherungsflanschen (15) besitzt.

5. Profil nach Anspruch 1 oder 2, **gekennzeichnet durch** die Ausbildung als Befestigungselement (22) zum Anbringen U-förmiger Deckentrage-Profile, bei dem auf einander gegenüberliegenden Seiten von einem Profil-Mittelteil (23) jeweils von einem Schraubenloch (26) durchdrungene Befestigungslaschen (27) als Befestigungsabschnitte seitlich vorstehen und auf den vom Mitteilteil abgewandten Seiten von den Befestigungslaschen (27) jeweils eine in die einen Schraubenkopf (20) randseitig übergreifende Sicherungslage abkantbare Sicherungslasche (28) hochgestellt ist.

6. An einem Verankerungsgrund mittels Befestigungsschrauben (18) anbringbares Profil, insbesondere Tragprofil für Paneele oder sonstige flächenhafte Bekleidungselemente, mit wenigstens einem sich in der Montagelage im wesentlichen parallel zum Verankerungsgrund erstreckenden Befestigungsabschnitt, der mit zumindest einem Schraubenloch (41) für die Aufnahme einer Befestigungsschraube (18), die in den Verankerungsgrund eindrehbar ist und einen in der Montagelage den Rand des Schraubenlochs (41) übergreifenden Schraubenkopf (20) mit einer Ansatzfläche für einen Schraubendreher besitzt, ausgerüstet ist, wobei auf wenigstens einer Seite vom Befestigungsabschnitt (42) zumindest im Bereich des Schraubenlochs (41) eine federelastisch ausgebildete Sicherungsrast (45) vorsteht, die beim Eindrehen der Befestigungsschraube (18) von deren Schraubenkopf (20) seitlich weggedrückt wird und in der Montagelage bei Freilassung der Schraubendreher-Ansatzfläche (19) in eine den Schraubenkopf (20) randseitig übergreifende Sicherungslage einschnappt,
**dadurch gekennzeichnet,**
**dass** bei der Ausbildung als langgestrecktes Hutprofil (40) mit beidseitig von einem Befestigungsabschnitt (42) im wesentlichen in Parallelebenen zu dem Befestigungsabschnitt längslaufenden Tragflanschen (43), die für die Anbringung von flächenhaften Bekleidungselementen bestimmt sind, in sich zwischen den Tragflanschen (43) und dem Befestigungsabschnitt (42) erstreckenden Profilstegen (44) längslaufende und in der Montagelage den einen Schlitz oder Kreuzschlitz als Ansatzfläche für den Schraubendreher aufweisenden Schraubenkopf (20) einer eingedrehten Befestigungsschraube (18) randseitig übergreifende Sicken (45) als Sicherungsrasten hineingeformt sowie in einem den Durchmesser des Schraubenkopfs (20) unterschreitenden Abstand voneinander symmetrisch zu dem Schraubenloch (41) angeordnet sind.

7. Profil nach Anspruch 6, **dadurch gekennzeichnet, dass** die längslaufenden Sicken (45) nach der vom Befestigungsabschnitt (42) wegweisenden Seite von divergierend zueinander verlaufenden Schrägen (36) und auf der zum Befestigungsabschnitt (42) hinweisenden Seite von Hinterschneidungen der Profilstege (44) bildenden-Stufen (38) begrenzt sind.

## Claims

1. Profile member, particularly a support profile member for the reception of panels or other two-dimensional cladding elements, mountable at an anchorage base (17) by means of fastening screws (18), comprising at least one fastening section (13, 27), which in the mounted position extends substantially parallel to the anchorage base (17) and which is equipped with at least one screw hole (14, 26) for reception of a fastening screw (18), which can be screwed into the anchorage base and has a screw head (20) engaging in the mounted position over the edge of the screw hole (14, 26) and having an engagement surface for a screwdriver, **characterised in that** a securing tongue (15, 28) projects from the fastening section (13, 27) at least into the region of the screw hole (14, 26) and enables unobstructed screwing-in of the fastening screw, the screw head (20) of which has a slot or cross-slot (19) as engagement surface for the screwdriver, wherein the securing tongue (15, 28) in the mounted position of the profile member after screwing-in of the fastening screw (18) is permanently deformable into a securing position which engages over the screw head (20) thereof at the edge side while leaving free the screwdriver engagement surface (19) and in which the securing tongue (15, 28) engages over the screw head (20) without covering the screwdriver engagement surface (19).

2. Profile member according to claim 1, **characterised in that** the securing tongue (15, 28) is provided in the region of the screw hole (14, 26) with a notch (16, 29) in such a manner that in the securing position the notch edges engage over the screw head (20) at the edge side while leaving free the screwdriver engagement surface (19).

3. Profile member according to claim 1 or 2, **characterised in that** on the side, which is remote from a profile member centre part (11, 23), of the fastening section (13, 27) a longitudinally extending securing flange (15, 28) stands up therefrom as a securing tongue which can be folded over into the securing position.

4. Profile member according to claim 3, **characterised by** construction as an elongate hat profile member (10) which as fastening sections has fastening flanges (13), which extend longitudinally at both sides from a profile member centre part (11), with securing flanges (15) standing up therefrom at the edge.

5. Profile member according to claim 1 or 2, **characterised by** formation as a fastening element (22) for the mounting of U-shaped ceiling support profile members in which on mutually opposite sides of a profile member centre part (23) in each instance a fastening tongue (27), which is penetrated by a screw hole (26), laterally protrudes as fastening section, and a respective securing tongue (28), which can be folded over into the securing position engaging over a screw head (20) at the edge side, stands up from each of the fastening straps (27) on the sides remote from the centre part.

6. Profile member, particularly support profile member for panels or other such two-dimensional cladding elements, mountable at an anchorage base by means of fastening screws (18), comprising at least one fastening section which in the mounted position extends substantially parallel to the anchorage base and which is equipped with at least one screw hole (41) for reception of a fastening screw (18), which can be screwed into the anchorage base and has a screw head (20), which in the mounted position engages over the edge of the screw hole (41), with an engagement surface for a screwdriver, wherein a resiliently constructed securing detent (45) projects on at least one side of the fastening section (42) at least in the region of the screw hole (41), which securing detent on screwing-in of the fastening screw (18) is laterally urged away by the screw head (20) thereof and in the mounted position snaps into a securing position engaging over the screw head (20) at the edge side while leaving free the screwdriver engagement surface (19), **characterised in that** in the case of construction as an elongate hat profile (40) with support flanges (43), which extend longitudinally at both sides from a fastening section (42) substantially in planes parallel to the fastening section and which are intended for mounting of two-dimensional cladding elements, longitudinally extending corrugations (45) are formed as securing detents in profile member webs (44), which extend between the support flanges (43) and the fastening section (42), and in the mounted position engage over the screw head (20) at the edge side, which screw head has a slot or cross-slot as engagement surface for the screwdriver, of a screwed-in fastening screw (18) and are arranged at a mutual spacing, which is less than the diameter of the screw head (20), symmetrically with respect to the screw hole (41).

7. Profile member according to claim 6, **characterised in that** the longitudinally extending corrugations (45) are bounded towards the side facing away from the fastening section (42) by oblique portions (36) extending divergently from one another and on the side facing towards the fastening section (42) by steps (38) forming undercuts of the profile member webs (44).

## Revendications

1. Profilé, en particulier profilé porteur pour recevoir des panneaux ou d'autres éléments de revêtement plats, à attacher à un support d'ancrage (17) à l'aide de vis de fixation (18) avec au moins une section de fixation (13, 27) qui, en position de montage, s'étend sensiblement en parallèle par rapport au support d'ancrage (17) et qui est munie d'au moins un trou de vis (14, 26) pour recevoir une vis de fixation (18) pouvant être introduite dans le support d'ancrage et comprenant une tête de vis (20) qui, en position de montage, recouvre le bord du trou de vis (14, 26) et qui est munie d'une surface d'attaque pour un tournevis, **caractérisé en ce qu'**au moins dans la zone du trou de vis (14, 26) une languette d'arrêt (15, 28) s'avance à partir de la section de fixation (13, 27), cette languette permettant une introduction sans entrave de la vis de fixation dont la tête de vis (20) est muni d'un fente ou d'une fente cruciforme (19) comme surface d'attaque pour un tournevis, la languette d'arrêt (15, 28) pouvant, dans la position de montage du profilé et après l'introduction de la vis de fixation (18), être déformée de manière permanente dans une position d'arrêt recouvrant le bord de la tête de vis (20) en laissant libre la surface d'attaque pour un tournevis (19) et dans laquelle la languette d'arrêt (15, 28) passe par-dessus la tête de vis (20) sans recouvrir la surface d'attaque pour un tournevis (19).

2. Profilé selon la revendication 1, **caractérisé en ce que** dans la zone du trou de vis (14, 26) la languette d'arrêt (15, 28) est munie d'une encoche (16, 29) de manière telle que dans une position d'arrêt les bords de l'encoche recouvrent le bord de la tête de vis (20) en laissant libre la surface d'attaque pour un tournevis (19).

3. Profilé selon la revendication 1 ou 2, **caractérisé en ce que**, sur le côté de la section de fixation (13, 27) opposé à une partie médiane (11, 23) du profilé, une bride d'arrêt (15, 28) s'étendant dans la direction longitudinale est relevée en tant que languette d'arrêt pouvant être repliée dans la position d'arrêt.

4. Profilé selon la revendication 3, **caractérisé par** sa configuration comme profilé en forme de chapeau (10) étiré en longueur, qui comprend comme sections de fixation des ailes de fixation (13) étirées en longueur et s'étendant des deux côtés d'une partie médiane (11) du profilé avec des brides d'arrêt (15) s'étendant en hauteur à partir des bords de celles-ci.

5. Profilé selon la revendication 1 ou 2, **caractérisé par** sa configuration en tant qu'élément de fixation (22) pour la mise en place de profilés porteurs de plafonds en forme de U, avec lequel des languettes de fixation (27) respectivement traversées par un trou de vis (26) s'avancent latéralement en tant que sections de fixation sur des côtés opposés l'un à l'autre d'une partie médiane (23) du profilé, et sur lesquelles, sur les côtés opposés à la partie médiane, est élevée à partir des languettes de fixation (27) respectivement une bride d'arrêt (28) pouvant être repliée dans la position d'arrêt et qui recouvre le bord d'une tête de vis (20).

6. Profilé, en particulier profilé porteur pour recevoir des panneaux ou d'autres éléments de revêtement plats, à attacher à un support d'ancrage à l'aide de vis de fixation (18) avec au moins une section de fixation qui, en position de montage, s'étend sensiblement en parallèle par rapport au support d'ancrage et qui est munie d'au moins un trou de vis (41) pour recevoir une vis de fixation (18) pouvant être introduite dans le support d'ancrage et comprenant une tête de vis (20) qui, en position de montage, recouvre le bord du trou de vis (41) et qui est munie d'une surface d'attaque pour un tournevis, alors que sur au moins un côté, au moins dans la zone du trou de vis (41), un cran d'arrêt configuré de manière souple (45) s'avance à partir de la section de fixation (42), ce cran d'arrêt étant poussé vers le côté par la tête de vis (20) de la vis de fixation (18) lors de son vissage et engrenant dans la position de montage dans une position d'arrêt recouvrant le bord de la tête de vis (20) en laissant libre la surface d'attaque pour un tournevis (19), **caractérisé en ce qu'**avec la configuration en tant que profilé à chapeau (40) étiré en longueur avec des ailes porteuses (43) s'étendant en longueur des deux côtés d'une section de fixation (42) et sensiblement sur des plans parallèles à la section de fixation, qui sont prévues pour la mise en place de panneaux ou d'autres éléments de revêtement plats, dans des nervures de profilés (44) s'étendant entre les ailes porteuses (43) et la section de fixation (42) sont formées en tant que crans d'arrêt des moulures (45) s'étendant en longueur et recouvrant dans la position de montage les bords la tête de vis (20) d'une vis de fixation mise en place (18) et comportant une fente ou une fente en croisillon servant de surface d'attaque pour un tournevis, ces moulures étant disposées avec un espacement entre elles qui est inférieur au diamètre de la tête de vis (20) et de manière symétrique par rapport aux trous de vis (41).

7. Profilé selon la revendication 6, **caractérisé en ce que** les moulures étirées en longueur (45) sont délimitées vers le côté dirigé à l'opposé de la section de fixation (42) par des parties inclinées (36) s'étendant de manière divergente entre elles et sur le côté dirigé vers la section de fixation (42) par des paliers (38) formant des parties creuses des branches de profilés (44).
